(19) Europäisches Patentamt
European Patent Office
Office européen des brevets

(11) **EP 3 130 619 A1**

(12) **EUROPEAN PATENT APPLICATION**
published in accordance with Art. 153(4) EPC

(43) Date of publication:
**15.02.2017 Bulletin 2017/07**

(21) Application number: **15775987.9**

(22) Date of filing: **19.03.2015**

(51) Int Cl.:
*C08G 16/04* $^{(2006.01)}$    *C08L 61/08* $^{(2006.01)}$
*C08L 67/02* $^{(2006.01)}$    *C09D 161/08* $^{(2006.01)}$

(86) International application number:
**PCT/JP2015/058210**

(87) International publication number:
**WO 2015/156094 (15.10.2015 Gazette 2015/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **10.04.2014 JP 2014081037**

(71) Applicant: DIC Corporation
**Tokyo 174-8520 (JP)**

(72) Inventors:
• **KAGE, Takakazu**
**Ichihara-shi**
**Chiba 290-8585 (JP)**
• **KIDA, Shigenobu**
**Ichihara-shi**
**Chiba 290-8585 (JP)**

(74) Representative: **Beckmann, Claus et al**
**Kraus & Weisert**
**Patentanwälte PartGmbB**
**Thomas-Wimmer-Ring 15**
**80539 München (DE)**

(54) **ALKOXYLATED RESOL-TYPE PHENOL RESIN MANUFACTURING METHOD, ALKOXYLATED RESOL-TYPE PHENOL RESIN, RESIN COMPOSITION, AND COATING**

(57) In order to provide a curing agent (alkoxylated resole-type phenolic resin) with which a coating film having high hot-water resistance, high workability, and high adhesion to metals may be formed without limiting the main agent to be a bisphenol-A-type epoxy resin, the present invention provides a method for producing an alkoxylated resole-type phenolic resin. The method includes reacting a phenol (a1) including meta-cresol with an aldehyde (a2) in the presence of a basic compound to prepare a resole-type phenolic resin (A); and reacting the resole-type phenolic resin (A) with an alcohol (B) in the presence of an acidic compound having an acid dissociation constant (pKa) of 0 or less.

EP 3 130 619 A1

**Description**

Technical Field

The present invention relates to an alkoxylated resole-type phenolic resin particularly suitable as a curing agent included in can-coating materials used for coating metal cans, that is, specifically, the side walls and caps of beverage cans, food cans, and the like, and a method for producing the phenolic resin. The present invention also relates to a resin composition suitable as a can-coating material used for coating the side walls and caps of beverage cans, food cans, and the like and a coating material that includes the resin composition.

Background Art

The inner surfaces of beverage cans and food cans are coated with a coating film that reduces the likelihood of corrosion of cans being caused by the beverage or food contained therein. Since the coating film is commonly deposited on a metal prior to the production of cans, the coating film is required to have workability good enough to prevent the coating film from being detached from cans during the production of cans. The coating film is also required to have good adhesion to metals and good hot-water resistance.

A known example of coating materials used for forming the coating film is a coating material that includes a bisphenol-A-type epoxy resin that serves as a main agent and a phenolic resin that serves as a curing agent (e.g., see PTL 1). The coating material including a bisphenol-A-type epoxy resin has high workability, high hot-water resistance, and high adhesion to metals. PTL 1 discloses a phenolic resin (alkoxylated resole resin) that may be used as a curing agent. The phenolic resin is produced by reacting meta-cresol with formaldehyde to prepare a resole-type phenolic resin and converting 60% or more of methylol groups included in the resole-type phenolic resin into alkoxy groups. The phenolic resin has a weight-average molecular weight (Mw) of 600 to 1,800. The ratio (Mw/Mn) of the weight-average molecular weight (Mw) of the phenolic resin to the number-average molecular weight (Mn) of the phenolic resin is 3.0 or less.

However, the bisphenol-A-type epoxy resin may include bisphenol A, which is considered to function as endocrine disruptor and carry a risk of adversely affecting the brain of living organisms, as an unreacted material in the production of the bisphenol-A-type epoxy resin. In addition, bisphenol A may elute from a coating film formed of a coating material that includes the bisphenol-A-type epoxy resin when the coating film is cleaned with a detergent or brought into contact with an acidic liquid or a hot liquid. Therefore, the development of can-coating materials that do not include the bisphenol-A-type epoxy resin has been anticipated.

Examples of resins used as an alternative to the bisphenol-A-type epoxy resin include an acrylic resin including a hydroxyl group, an alkyd resin including a hydroxyl group, and a polyester resin including a hydroxyl group. It is described in PTL 1 that the alkoxylated resole resin described in PTL 1 may be used as a curing agent for curing the above resins other than the bisphenol-A-type epoxy resin.

According to Examples of PTL 1, the alkoxylated resole resin, which is used as a curing agent for curing the bisphenol-A-type epoxy resin, is produced by reacting meta-cresol with formaldehyde in the presence of sodium hydroxide that serves as a catalyst to prepare a resole-type phenolic resin and reacting the resole-type phenolic resin with an alcohol in the presence of formic acid that serves as a catalyst. However, it is difficult to form a coating film having high hot-water resistance, high workability, and high adhesion to metals by simply using the alkoxylated resole resin described in Examples of PTL 1 as a preferred embodiment in combination with a resin other than the bisphenol-A-type epoxy resin, such as a polyester resin including a hydroxyl group.

Citation List

Patent Literature

PTL 1: Japanese Unexamined Patent Application Publication No. 2000-336304

Summary of Invention

Technical Problem

It is an object of the present invention to provide a curing agent (alkoxylated resole-type phenolic resin) with which a coating film having high hot-water resistance, high workability, and high adhesion to metals may be formed without limiting the main agent to be a bisphenol-A-type epoxy resin. It is another object of the present invention to provide a method for producing the alkoxylated resole-type phenolic resin. It is still another object of the present invention to provide a resin composition suitable as a can-coating material used for coating the side walls and caps of beverage cans, food cans, and the like and a coating material that includes the resin composition.

Solution to Problem

The inventors of the present invention conducted extensive studies in order to address the above issues and, as a result, found that it is possible to produce an alkoxylated resole-type phenolic resin that can be used as a curing agent with which a coating film having high hot-water resistance, high workability, and high adhesion to metals may be formed by preparing a resole-type phenolic resin from a phenol including meta-cresol and reacting the resole-type phenolic resin with an alcohol (B) in the presence of an acidic compound having an acid dissociation constant (pKa) of 0 or less. It was also found that an alkoxylated resole-type phenolic resin other than the above-described one can be used as a curing agent with which a coating film having high hot-water resistance, high workability, and high adhesion to metals may be formed in the case where the weight-average molecular weight of the alkoxylated resole-type phenolic resin and the proportion of methylol groups that are included in the resole-type phenolic resin and converted into alkoxy groups (alkoxylation ratio) are each set to fall within a specific range. Thus, the present invention was made.

Specifically, the present invention provides a method for producing an alkoxylated resole-type phenolic resin, the method including reacting a phenol (a1) including meta-cresol with an aldehyde (a2) in the presence of a basic compound to prepare a resole-type phenolic resin (A); and reacting the resole-type phenolic resin (A) with an alcohol (B) in the presence of an acidic compound having an acid dissociation constant (pKa) of 0 or less.

The present invention also provides an alkoxylated resole-type phenolic resin produced by reacting a phenol (a1) including meta-cresol with an aldehyde (a2) in the presence of a basic compound to prepare a resole-type phenolic resin (A) and reacting the resole-type phenolic resin (A) with an alcohol (B), the alkoxylated resole-type phenolic resin having a weight-average molecular weight of 1,900 to 6,000, wherein 50% or more of methylol groups included in the resole-type phenolic resin (A) are converted into alkoxy groups.

The present invention provides an alkoxylated resole-type phenolic resin produced by reacting a phenol (a1) including meta-cresol with an aldehyde (a2) in the presence of a basic compound to prepare a resole-type phenolic resin (A) and reacting the resole-type phenolic resin (A) with an alcohol (B), the alkoxylated resole-type phenolic resin having a weight-average molecular weight of 600 to 1,800, wherein 40% to 59% of methylol groups included in the resole-type phenolic resin (A) are converted into alkoxy groups.

The present invention further provides a resin composition including an alkoxylated resole-type phenolic resin produced by the above-described production method or the above-described alkoxylated resole resin; and a polyester resin including a hydroxyl group.

The present invention also provides a coating material including the above-described resin composition. Advantageous Effects of Invention

The production method according to the present invention enables a curing agent (alkoxylated resole-type phenolic resin) with which a coating film having high workability and high adhesion to metals may be formed to be produced. An alkoxylated resole-type phenolic resin produced by the production method according to the present invention and the alkoxylated resole-type phenolic resin according to the present invention can be suitably used in combination with various main agents and are preferably used in combination with a polyester resin including a hydroxyl group to form a composition. A coating material that includes the composition can be suitably used as a coating material for coating the inner surfaces of beverage cans and food cans.

Description of Embodiments

A method for producing an alkoxylated resole-type phenolic resin according to the present invention includes reacting a phenol (a1) including meta-cresol with an aldehyde (a2) in the presence of a basic compound to prepare a resole-type phenolic resin (A) and reacting the resole-type phenolic resin (A) with an alcohol (B) in the presence of an acidic compound having an acid dissociation constant (pKa) of 0 or less.

The phenol (a1) used in the present invention may include a phenol other than meta-cresol in an amount such that the advantageous effects of the present invention are not impaired. The content of meta-cresol in the phenol (a1) is preferably 10% to 100% by mass and is more preferably 50% to 100% by mass.

Examples of the phenol other than meta-cresol include phenol, meta-ethylphenol, 3,5-xylenol, metamethoxyphenol, para-cresol, ortho-cresol, para-tert-butylphenol, para-ethylphenol, 2,3-xylenol, 2,5-xylenol, and metamethoxyphenol. When the phenols other than meta-cresol are used, they may be used alone or in combination of two or more.

Examples of the aldehyde (a2) used in the present invention include formaldehyde, para-formaldehyde, and glyoxal. The above aldehydes may be used alone or in combination of two or more. In particular, formaldehyde is preferable due to its economic advantages.

The amount of aldehyde (a2) used in the present invention is preferably 1.0 to 4.0 moles and more preferably 1.5 to 3.5 moles per mole of the phenol (a1) in order to produce the alkoxylated resole-type phenolic resin with good reactivity and efficiency.

The basic compound used in the present invention serves as a catalyst in the reaction of the phenol (a1) with the aldehyde (a2). Examples of the basic compound include hydroxides of alkali metals, such as sodium hydroxide, lithium hydroxide, and potassium hydroxide; hydroxides of alkaline-earth metals, such as magnesium hydroxide and calcium hydroxide; and amines such as triethylamine, trimethylamine, and ethanolamine. The amount of basic compound used is preferably 0.01 to 0.5 moles and is more preferably 0.05 to 0.3 moles per mole of the phenol (a1) in order to enhance the reactivity of the phenol (a1) with the aldehyde (a2).

The production method according to the present invention begins with reacting the phenol (a1) with the aldehyde (a2) in the presence of the basic compound to prepare a resole-type phenolic resin (A). This reaction is conducted under the following conditions: reaction temperature: e.g., 50°C to 80°C; reaction time: 1 to 5 hours.

Subsequent to the phenol (a1) being reacted with the aldehyde (a2) in the presence of the basic compound to prepare the resole-type phenolic resin (A), the basic compound may optionally be neutralized. Examples of a compound used for neutralizing the basic compound include sulfuric acid, acetic acid, and phosphoric acid. Subsequent to the optional neutralization of the basic compound, the resole-type phenolic resin (A) may optionally be washed with water and subjected to vacuum concentration in order to remove moisture therefrom.

The resole-type phenolic resin (A) prepared by the above-described production method is subsequently reacted with an alcohol (B) in the presence of an acidic compound having an acid dissociation constant (pKa) of 0 or less.

Examples of the alcohol (B) include n-butyl alcohol, isobutyl alcohol, and n-amyl alcohol. The amount of alcohol (B) used is preferably 100 to 500 parts by mass and is more preferably 200 to 400 parts by mass relative to 100 parts by mass of the resole-type phenolic resin (A) in order to enhance the reactivity of the resole-type phenolic resin (A) with the alcohol (B).

The acidic compound used in the present invention has an acid dissociation constant (pKa) of 0 or less. Using such a compound as a catalyst in the reaction of the resole-type phenolic resin (A) with the alcohol (B) enhances the reactivity of the alkoxylated resole-type phenolic resin (curing agent) with the polyester resin (main agent) described below and, as a result, makes it possible to produce an alkoxylated resole-type phenolic resin (curing agent) with which a coating film having high hot-water resistance, high workability, and high adhesion to metals may be formed. Among the acidic compounds used in the present invention, in particular, an acidic compound having an acid dissociation constant (pKa) of -5 to 0 is more preferable.

Examples of the acidic compound having an acid dissociation constant (pKa) of 0 or less include mineral acids such as sulfuric acid and hydrochloric acid; and aromatic sulfonic acids that are phenol sulfonic acids such as para-toluenesulfonic acid, xylenesulfonic acid, and hydroxybenzenesulfonic acid. In particular, the mineral acids are preferable and sulfonic acid is more preferable due to their economic advantages.

The parameter "pKa" used herein represents the strength of an acid in an aqueous solution at 25°C and defined by Expression (1) below.

[Expression 1]

$$pK_a = -\log_{10} \frac{[H_3O^+][A^+]}{[HA]} \quad \cdots\cdots (1)$$

(where [HA] represents the concentration of the acid, $[H_3O^+]$ represents the concentration of oxonium ions (= hydrated hydrogen ions), $[A^+]$ represents the concentration of a conjugate base (= acid residue) of the acid, and log10 represents common logarithm)

The amount of acidic compound having an acid dissociation constant (pKa) of 0 or less is preferably 0.01 to 0.5 moles and is more preferably 0.01 to 0.2 moles per mole of the phenol (a1) in order to enhance the reactivity of the phenol (a1) with the aldehyde (a2) and to produce the alkoxylated resole-type phenolic resin with efficiency.

In the present invention, reacting the resole-type phenolic resin (A) with the alcohol (B) in the presence of the acidic compound causes some or all of the methylol groups included in the resole-type phenolic resin (A) to be converted into alkoxy groups. The inventors of the present invention consider that this alkoxylation increases the compatibility of the resole-type phenolic resin with the polyester resin (main agent) described below and, as a result, makes it possible to produce an alkoxylated resole-type phenolic resin (curing agent) with which a coating film having high hot-water resistance, high workability, and high adhesion to metals may be formed. It is also expected that, in addition to the above-described advantageous effects, the production method according to the present invention enables an alkoxylated resole-type phenolic resin having good reactivity with the polyester resin (main agent) described below to be produced. Thus, it is preferable to react the resole-type phenolic resin (A) with the alcohol (B) such that 40% to 59% of methylol groups included in the resole-type phenolic resin (A) are converted into alkoxy groups.

In the production method according to the present invention, it is preferable to react the resole-type phenolic resin (A) with the alcohol (B) such that 50% or more and more preferably 60% to 90% of methylol groups included in the resole-type phenolic resin (A) are converted into alkoxy groups in order to produce an alkoxylated resole-type phenolic resin having increased compatibility with the polyester resin (main agent) described below.

The proportion (%) of methylol groups converted into alkoxy groups (hereinafter, may be referred to as "degree of alkoxylation") is determined on the basis of the mass of methylol groups.

In the production method according to the present invention, it is preferable to react the phenol (a1) with the aldehyde (a2) and the alcohol (B) such that the weight-average molecular weight (Mw) of the alkoxylated resole-type phenolic resin is 1,900 to 6,000 and more preferably 1,900 to 4,000 in order to produce an alkoxylated resole-type phenolic resin (curing agent) with which a coating film having high hot-water resistance, high workability, and high adhesion to metals may be formed.

In the production method according to the present invention, it is preferable to react the phenol (a1) with the aldehyde (a2) and the alcohol (B) such that the weight-average molecular weight (Mw) of the alkoxylated resole-type phenolic resin is 600 to 1,800 and more preferably 600 to 1,500 in order to produce an alkoxylated resole-type phenolic resin (curing agent) that exhibits good curability when being used in combination with the polyester resin (main agent) described below.

Accordingly, in the production method according to the present invention, it is preferable to react the phenol (a1) with the aldehyde (a2) and the alcohol (B) such that the weight-average molecular weight (Mw) of the alkoxylated resole-type phenolic resin is 1,900 to 6,000 and 50% or more of the methylol groups are converted into alkoxy groups in order to produce an alkoxylated resole-type phenolic resin (curing agent) which has increased compatibility with the polyester resin (main agent) described below and with which a coating film having high hot-water resistance, high workability, and high adhesion to metals may be formed. It is more preferable to react the phenol (a1) with the aldehyde (a2) and the alcohol (B) such that the weight-average molecular weight (Mw) of the alkoxylated resole-type phenolic resin is 1,900 to 4,000 and 60% to 90% of the methylol groups are converted into alkoxy groups.

In the production method according to the present invention, it is preferable to react the phenol (a1) with the aldehyde (a2) and the alcohol (B) such that the weight-average molecular weight (Mw) of the alkoxylated resole-type phenolic resin is 600 to 1,800 and 40% to 59% of the methylol groups are converted into alkoxy groups in order to produce an alkoxylated resole-type phenolic resin (curing agent) which has increased compatibility with the polyester resin (main agent) described below and with which a coating film having high hot-water resistance, high workability, and high adhesion to metals may be formed. It is more preferable to react the phenol (a1) with the aldehyde (a2) and the alcohol (B) such that the weight-average molecular weight (Mw) of the alkoxylated resole-type phenolic resin is 600 to 1,500 and 40% to 59% of the methylol groups are converted into alkoxy groups.

In the present invention, weight-average molecular weight (Mw) and number-average molecular weight (Mn) are determined by gel permeation chromatography (hereinafter, abbreviated as "GPC") in terms of polystyrene. The GPC measurement is conducted under the following conditions (hereinafter, the measurement conditions may be referred to as "GPC measurement conditions (1)").

Weight-average molecular weight (Mw) is determined by gel permeation chromatography (hereinafter, abbreviated as "GPC") in terms of polystyrene. The GPC measurement is conducted under the following conditions (hereinafter, the measurement conditions may be referred to as "GPC measurement conditions (1)").

[GPC Measurement Conditions (1)]

Measuring equipment: "HLC-8220 GPC" produced by Tosoh Corporation,
Columns: Guard columns "HXL-L" (6.0 mm I.D. x 4 cm) produced by Tosoh Corporation + "TSK-GEL G4000HXL" (7.8 mm I.D. x 30 cm) produced by Tosoh Corporation + "TSK-GEL G3000HXL" (7.8 mm I.D. x 30 cm) produced by Tosoh Corporation + "TSK-GEL G2000HXL" (7.8 mm I.D. x 30 cm) produced by Tosoh Corporation + "TSK-GEL G1000HXL" (7.8 mm I.D. x 30 cm) produced by Tosoh Corporation
Detector: ELSD ("ELSD2000" produced by Alltech Japan)
Data processing: "GPC-8020 Model-II Data Analysis Version 4.30" produced by Tosoh Corporation
Measurement conditions: Column temperature 40°C

Developing solvent Tetrahydrofuran (THF) Flow rate 1.0 ml/min

Sample: Samples (5 μl) were each prepared by filtering a 1.0-mass% (in terms of resin solid content) tetrahydrofuran solution through a microfilter.
Reference sample: the following monodisperse polystyrenes having known molecular weights were used in accordance with the measurement manual provided with the "GPC-8020 Model-II Data Analysis Version 4.30".

(Monodisperse Polystyrene)

| | |
|---|---|
| "A-500" | produced by Tosoh Corporation |
| "A-1000" | produced by Tosoh Corporation |
| "A-2500" | produced by Tosoh Corporation |
| "A-5000" | produced by Tosoh Corporation |
| "F-1" | produced by Tosoh Corporation |
| "F-2" | produced by Tosoh Corporation |
| "F-4" | produced by Tosoh Corporation |
| "F-10" | produced by Tosoh Corporation |
| "F-20" | produced by Tosoh Corporation |
| "F-40" | produced by Tosoh Corporation |
| "F-80" | produced by Tosoh Corporation |
| "F-128" | produced by Tosoh Corporation |
| "F-288" | produced by Tosoh Corporation |
| "F-550" | produced by Tosoh Corporation |

As described above, the terms "weight-average molecular weight (Mw)" and "number-average molecular weight (Mn)" used herein refer to those determined under "GPC measurement conditions (1)". However, in the present invention, weight-average molecular weight (Mw) and number-average molecular weight (Mn) may vary depending on the conditions under which the GPC measurement is conducted. That is, for example, in the case where a preferable range of the weight-average molecular weight (Mw) of an alkoxylated resole resin produced by the production method according to the present invention is defined on the basis of weight-average molecular weight (Mw) determined under "GPC measurement conditions (2)" below, the description "it is preferable to react the phenol (a1) with the aldehyde (a2) and the alcohol (B) such that the weight-average molecular weight (Mw) of the alkoxylated resole-type phenolic resin is 1,900 to 6,000 and more preferably 1,900 to 4,000 in order to produce an alkoxylated resole-type phenolic resin (curing agent) with which a coating film having high hot-water resistance, high workability, and high adhesion to metals may be formed" changes to "it is preferable to react the phenol (a1) with the aldehyde (a2) and the alcohol (B) such that the weight-average molecular weight (Mw) of the alkoxylated resole-type phenolic resin is 1,700 to 5,500 and more preferably 1,700 to 3,600 in order to produce an alkoxylated resole-type phenolic resin (curing agent) with which a coating film having high hot-water resistance, high workability, and high adhesion to metals may be formed".

Similarly, in the case where a preferable range of the weight-average molecular weight (Mw) of an alkoxylated resole resin produced by the production method according to the present invention is defined on the basis of weight-average molecular weight (Mw) determined under "GPC measurement conditions (2)" below, the description "it is preferable to react the phenol (a1) with the aldehyde (a2) and the alcohol (B) such that the weight-average molecular weight (Mw) of the alkoxylated resole-type phenolic resin is 600 to 1,800 and more preferably 600 to 1,500 in order to produce an alkoxylated resole-type phenolic resin (curing agent) that exhibits good curability when being used in combination with the polyester resin (main agent) described below" changes to "it is preferable to react the phenol (a1) with the aldehyde (a2) and the alcohol (B) such that the weight-average molecular weight (Mw) of the alkoxylated resole-type phenolic resin is 500 to 1,600 and more preferably 500 to 1,400 in order to produce an alkoxylated resole-type phenolic resin (curing agent) that exhibits good curability when being used in combination with the polyester resin (main agent) described below.".

Thus, in the case where the GPC measurement is conducted under the GPC measurement conditions (2), it is preferable in the production method according to the present invention to react the phenol (a1) with the aldehyde (a2) and the alcohol (B) such that the weight-average molecular weight (Mw) of the alkoxylated resole-type phenolic resin is 1,700 to 5,500 and 50% or more of the methylol groups are converted into alkoxy groups in order to produce an alkoxylated resole-type phenolic resin (curing agent) which has increased compatibility with the polyester resin (main agent) described below and with which a coating film having high hot-water resistance, high workability, and high adhesion to metals may be formed. It is more preferable to react the phenol (a1) with the aldehyde (a2) and the alcohol (B) such that the weight-average molecular weight (Mw) of the alkoxylated resole-type phenolic resin is 1,700 to 3,600 and 60% to 90% of the methylol groups are converted into alkoxy groups.

In the case where the GPC measurement is conducted under the GPC measurement conditions (2), it is preferable in the production method according to the present invention to react the phenol (a1) with the aldehyde (a2) and the alcohol (B) such that the weight-average molecular weight (Mw) of the alkoxylated resole-type phenolic resin is 500 to 1,600 and 40% to 59% of the methylol groups are converted into alkoxy groups in order to produce an alkoxylated resole-type phenolic resin (curing agent) which has increased compatibility with the polyester resin (main agent) described below and with which a coating film having high hot-water resistance, high workability, and high adhesion to metals may be formed. It is more preferable to react the phenol (a1) with the aldehyde (a2) and the alcohol (B) such that the weight-average molecular weight (Mw) of the alkoxylated resole-type phenolic resin is 500 to 1,400 and 40% to 59% of the methylol groups are converted into alkoxy groups.

[GPC Measurement Conditions (2)]

Measuring equipment: "Shodex GPC-104" produced by Showa Denko K.K.,
Columns: Guard columns "LF-G" (6.0 mm I.D. x 4 cm) produced by Showa Denko K.K. + "KF-804" (7.8 mm I.D. x 30 cm) produced by Showa Denko K.K. + "KF-803" (7.8 mm I.D. x 30 cm) produced by Showdex Kabushiki Kaisha + "KF-802" (7.8 mm I.D. x 30 cm) produced by Shodex Kabushiki Kaisha + "KF-802" (7.8 mm I.D. x 30 cm) produced by Shodex Kabushiki Kaisha.
Detector: Integrated RI detector "GPC-104" produced by Showa Denko K.K.
Data processing: "SIC $\mu$7 Data Station" produced by System Instruments Co., Ltd.
Measurement conditions: Column temperature 40°C

Developing solvent tetrahydrofuran (THF) Flow rate 1.0 ml/min

Sample: Samples were each prepared by filtering a 1.0-mass% (in terms of resin solid content) tetrahydrofuran solution through a microfilter (5 $\mu$l).
Reference sample: the following monodisperse polystyrenes having known molecular weights were used in accordance with the measurement manual provided with the "GPC-8020 Model-II Data Analysis Version 4.30".

(Monodisperse Polystyrene)

"A-500"      produced by Tosoh Corporation
"A-1000"     produced by Tosoh Corporation
"A-2500"     produced by Tosoh Corporation
"A-5000"     produced by Tosoh Corporation
"F-1"        produced by Tosoh Corporation
"F-2"        produced by Tosoh Corporation
"F-4"        produced by Tosoh Corporation
"F-10"       produced by Tosoh Corporation
"F-20"       produced by Tosoh Corporation
"F-40"       produced by Tosoh Corporation
"F-80"       produced by Tosoh Corporation
"F-128"      produced by Tosoh Corporation
"F-288"      produced by Tosoh Corporation
"F-550"      produced by Tosoh Corporation

The alkoxylated resole-type phenolic resin according to the present invention is produced by reacting the phenol (a1) including meta-cresol with the aldehyde (a2) in the presence of the basic compound and reacting the resulting resole-type phenolic resin (A) with the alcohol (B). The weight-average molecular weight of the alkoxylated resole-type phenolic resin is 1,900 to 6,000, and 50% or more of methylol groups included in the resole-type phenolic resin (A) are converted into alkoxy groups (hereinafter, this alkoxylated resole-type phenolic resin may be referred to as "the first alkoxylated resole-type phenolic resin according to the present invention"). The other alkoxylated resole-type phenolic resin according to the present invention is produced by reacting the phenol (a1) including meta-cresol with the aldehyde (a2) in the presence of the basic compound and reacting the resulting resole-type phenolic resin (A) with the alcohol (B). The weight-average molecular weight of the alkoxylated resole-type phenolic resin is 600 to 1,800, and 40% to 59% of methylol groups included in the resole-type phenolic resin (A) are converted into alkoxy groups (hereinafter, this alkoxylated resole-type phenolic resin may be referred to as "the second alkoxylated resole-type phenolic resin according to the present invention"). The above-described first and second alkoxylated resole-type phenolic resins are alkoxylated resole-type phenolic resins (curing agents) which has increased compatibility with the polyester resin (main agent) described below and with which a coating film having high hot-water resistance, high workability, and high adhesion to metals may be formed.

The weight-average molecular weight of the first alkoxylated resole-type phenolic resin according to the present invention and the weight-average molecular weight of the second alkoxylated resole-type phenolic resin according to the present invention are determined under the "GPC measurement conditions (1)" described above. The weight-average molecular weight of the first alkoxylated resole-type phenolic resin according to the present invention which is determined under the "GPC measurement conditions (2)" above is, for example, 1,700 to 5,500. The weight-average molecular weight of the second alkoxylated resole-type phenolic resin according to the present invention which is determined under the "GPC measurement conditions (2)" above is, for example, 500 to 1,600.

A preferable example of the above-described first alkoxylated resole-type phenolic resin and the first alkoxylated resole-type phenolic resin according to the present invention is a resin produced by the production method according to the present invention, that is, specifically, a resin produced by reacting the phenol (a1) including meta-cresol with the aldehyde (a2) in the presence of the basic compound to prepare a resole-type phenolic resin (A), and reacting the resole-type phenolic resin (A) with the alcohol (B) in the presence of an acidic compound having an acid dissociation constant (pKa) of 0 or less.

The alkoxylated resole-type phenolic resin according to the present invention can be used as a curing agent for various resins including a hydroxyl group. Therefore, it is possible to produce a resin composition that includes the alkoxylated resole-type phenolic resin according to the present invention that serves as a curing agent and a resin including a hydroxyl group which serves as a main agent. Such a resin composition is preferably used in the field of coating materials and the like as described below.

Examples of the resin including a hydroxyl group include an epoxy resin including a hydroxyl group, an acrylic resin including a hydroxyl group, an alkyd resin including a hydroxyl group, and a polyester resin including a hydroxyl group. Among the above resins including a hydroxyl group, a polyester resin including a hydroxyl group is preferably used in order to produce a resin composition which does not greatly cause environmental pollution or greatly affect the human body and with which a coating film having high hot-water resistance, high workability, and high adhesion to metals may be formed. A resin composition that includes an alkoxylated resole-type phenolic resin produced by the production method according to the present invention or the alkoxylated resole-type phenolic resin according to the present invention, and a polyester resin including a hydroxyl group is described below in detail.

The polyester resin including a hydroxyl group is a polyester resin that includes a hydroxyl group in the molecule. Such a polyester resin can be produced by, for example, reacting a polybasic acid with a polyhydric alcohol such that the amount of hydroxyl groups included in the polyhydric alcohol is excessively large relative to the amount of carboxyl groups included in the polybasic acid.

Examples of the polybasic acid include dibasic acids such as phthalic anhydride, isophthalic acid, terephthalic acid, tetrahydrophthalic anhydride, hexahydrophthalic anhydride, succinic acid, fumaric acid, adipic acid, sebacic acid, and maleic anhydride; and polybasic acids including three or more functional groups, such as trimellitic acid, pyromellitic acid, and benzophenone tetracarboxylic acid. The above polybasic acids may be used alone or in combination of two or more.

Examples of the polyhydric alcohol include ethylene glycol, diethylene glycol, 1,2-propylene glycol, 1,3-propanediol, 1,4-butanediol, neopentyl glycol, 1,5-pentanediol, triethylene glycol, tricyclodecane glycols, polyethylene glycol, polypropylene glycol, glycerin, trimethylolpropane, sorbitol, and pentaerythritol. The above polyhydric alcohols may be used alone or in combination of two or more.

The polyester resin including a hydroxyl group which is used in the present invention can be produced from the above-described polybasic acids and polyhydric alcohols by using various esterification reactions and may also be produced by a transesterification reaction in which a lower alkyl ester of a polybasic acid is used instead of the above-described polybasic acid.

The number-average molecular weight (Mn) of the polyester resin including a hydroxyl group which is used in the present invention is preferably 5,000 to 100,000 and is more preferably 8,000 to 35,000. Number-average molecular weight (Mn) can be determined by, for example, using the same method as in the measurement of weight-average molecular weight (Mw) [GPC measurement conditions (1)].

The polyester resin including a hydroxyl group which is used in the present invention may be a commercially available product. Examples of the commercially available product include VYLON 103, VYLON 822, VYLON 885, VYLON GK330, VYLON GK570, VYLON GK590, VYLON GK640, VYLON GK680, VYLON GK780, VYLON GK810, VYLON GK880, and VYLON GK890 (the above resins are produced by Toyobo Co., Ltd.); and elitel UE-3230 (produced by Unitika Ltd.).

The ratio [(phenolic resin)/(polyester resin)] of the amount of alkoxylated resole-type phenolic resin included in the resin composition according to the present invention to the amount of polyester resin including a hydroxyl group included in the resin composition is preferably 1/19 to 1/1 and is more preferably 1/9 to 1/2.

A coating material according to the present invention includes the resin composition according to the present invention. The coating material according to the present invention may optionally include a pigment, a solvent, an additive, and the like.

Examples of the pigment include an inorganic pigment and an organic pigment. Examples of the inorganic pigment include chromates (chrome yellow and chrome vermilion) ferrocyanides (Prussian blue), sulfides (cadmium yellow and cadmium red), oxides (titanium oxide, iron oxide red, iron black, and zinc oxide), sulfates (barium sulfate and lead sulfate), silicates (ultramarine blue and calcium silicate), carbonates (calcium carbonate and magnesium carbonate), phosphates (cobalt violet), metal powders (aluminium powder and bronze), and carbon (carbon black).

Examples of the organic pigment include azo organic pigments (benzidine yellow, Hansa yellow, vulcan orange, permanent red F5R, carmine 6B, lake red C, Cromophtal Red, and Cromophtal Yellow) and phthalocyanine organic pigments (phthalocyanine blue and phthalocyanine green). The above organic pigments may be used alone or in combination of two or more.

Examples of the solvent include aromatic hydrocarbon solvents such as toluene, xylene, Solvesso #100, and Solvesso #150; aliphatic hydrocarbon solvents such as hexane, heptane, octane, and decane; and ester solvents such as methyl acetate, ethyl acetate, isopropyl acetate, butyl acetate, amyl acetate, ethyl formate, and butyl propionate. Other examples of the solvent include the following water-miscible organic solvents: alcohol solvents such as methanol, ethanol, propanol, and butanol; ketone solvents such as acetone, methyl ethyl ketone, and cyclohexanone; and glycol ether solvents such as ethylene glycol (mono, di)methyl ether, ethylene glycol (mono, di)ethyl ether, ethylene glycol monopropyl ether, ethylene glycol monoisopropyl ether, monobutyl ether, diethylene glycol (mono, di)methyl ether, diethylene glycol (mono, di)ethyl ether, diethylene glycol monoisopropyl ether, diethylene glycol monobutyl ether, triethylene glycol (mono, di)methyl ether, propylene glycol (mono, di)methyl ether, propylene glycol monopropyl ether, propylene glycol monobutyl ether, and dipropylene glycol (mono, di)methyl ether. The above solvents may be used alone or in combination of two or more.

Examples of the additive include various lubricants, antifoaming agents, leveling agents, and lubricants. Other curing agents that serve as curing aids, such as a melamine resin, a benzoguanamine resin, and an isocyanate resin, may also be used in combination with the above additives.

A curing catalyst capable of promoting the reaction of the alkoxylated resole-type phenolic resin with the polyester resin including a hydroxyl group may optionally be added to the resin composition or the coating material according to the present invention. Preferable examples of the curing catalyst include inorganic acids such as phosphoric acid; organic acids such as dodecylbenzenesulfonic acid and toluenesulfonic acid; and curing catalysts produced by blocking the above acids with an amine or the like. The amount of curing catalyst used is preferably 0.01% to 5% by mass of the solid content of the coating material or the resin composition according to the present invention.

The resin composition and the coating material according to the present invention are preferably used as a can-coating material and are particularly preferably used as a coating agent used for coating inner surfaces of cans.

The resin composition and the coating material according to the present invention can be applied to a metal base material, such as a steel sheet or an aluminium sheet for cans, a PET film, or the like by various methods (e.g., spray coating such as air spraying, airless spraying, or electrostatic spraying; dip coating; roll coater coating; and a gravure coater and electrodeposition coating). The amount of resin composition or coating material applied to the metal base material or the like is preferably set such that the resulting coating film has a thickness about 0.1 to 20 μm after being dried.

In the case where the resin composition or coating material according to the present invention is used as a can-coating material, baking is preferably performed at 100°C to 28°C for 1 second to 30 minutes in order to form a cured coating film having good properties.

EXAMPLES

The present invention is described below more in detail with reference to specific examples. In the examples, all "parts" and "%" are on a mass basis unless otherwise specified. The $^{13}$C-NMR spectrum of each of the alkoxylated resole-type phenolic resins prepared in the examples was measured under the following conditions.

[$^{13}$C-NMR Spectrum Measurement Conditions]

Apparatus: "JNM-ECA500" produced by JEOL Ltd.
Solvent: Acetone

Example 1 (Method for Producing Alkoxylated Resole-type Phenolic Resin According to Present Invention)

To a four-neck flask equipped with a stirrer, a condenser, and a thermometer, 540 g (5 moles) of m-cresol, 489 g (15 moles) of 92% paraform, 740 g (10 moles) of n-butanol, and 5.4 g of sodium hydroxide were added. The resulting mixture was heated to 70°C and reacted at 70°C for 3 hours. To the mixture, 1110 g (15 moles) of n-butanol was added. After the pH inside the system was controlled to be 3.7 by using 60% sulfuric acid, the resulting mixture was reacted at 110°C for 4 hours. After the reaction had been completed, 600 g of ion-exchange water was added to the reaction mixture. The resulting mixture was stirred at 60°C and subsequently left to stand. The water layer separated at the bottom was removed. Then, the pressure was reduced and the solvent was removed. Thus, an n-butanol solution of an alkoxylated resole-type phenolic resin (1) having a solid content of 50% was prepared. The proportion (degree of alkoxylation) of methylol groups included in the alkoxylated resole-type phenolic resin (1) which were converted into butoxy groups was 55%. The weight-average molecular weight of the alkoxylated resole-type phenolic resin (1) which was determined under the "GPC measurement conditions (1)" was 990. The weight-average molecular weight of the alkoxylated resole-type phenolic resin (1) which was determined under the "GPC measurement conditions (2)" was 890.

Example 2 (Method for Producing Alkoxylated Resole-type Phenolic Resin According to Present Invention)

To a four-neck flask equipped with a stirrer, a condenser, and a thermometer, 108 g (1 mole) of m-cresol, 324 g (3 moles) of 37% formalin, and 16 g (0.1 moles) of a 25% aqueous sodium hydroxide solution were added. The resulting mixture was heated to 70°C and reacted at 70°C for 3 hours. Thus, a resole-type phenolic resin having a weight-average molecular weight of 800 was prepared. After the reaction had been completed, a 50% aqueous sulfuric acid solution was added to the reaction mixture in order to perform neutralization, and the separated, precipitated resin was washed with water four times. After the moisture had been removed by vacuum dehydration, 400 parts of n-butanol was added to 100 parts of the resole-type phenolic resin. After the pH inside the system was controlled to be 3.7 by using 60% sulfuric acid, the resulting mixture was reacted at 110°C for 4 hours. After the reaction had been completed, 600 g of ion-exchange water was added to the reaction mixture. The resulting mixture was stirred at 60°C and subsequently left to stand. The water layer separated at the bottom was removed. Then, the pressure was reduced and the solvent was removed. Thus, an n-butanol solution of an alkoxylated resole-type phenolic resin (2) having a solid content of 50% was prepared. The proportion (degree of alkoxylation) of methylol groups included in the alkoxylated resole-type phenolic resin (2) which were converted into butoxy groups was 80%. The weight-average molecular weight of the alkoxylated resole-type phenolic resin (2) which was determined under the "GPC measurement conditions (1)" was 1,000. The weight-average molecular weight of the alkoxylated resole-type phenolic resin (2) which was determined under the "GPC measurement conditions (2)" was 900.

Example 3 (Method for Producing Alkoxylated Resole-type Phenolic Resin According to Present Invention)

To a four-neck flask equipped with a stirrer, a condenser, and a thermometer, 540 g (5 moles) of m-cresol, 489 g (15 moles) of 92% paraform, 740 g (10 moles) of n-butanol, and 5.4 g of sodium hydroxide were added. The resulting mixture was heated to 75°C and reacted at 75°C for 5 hours. To the mixture, 1110 g (15 moles) of n-butanol was added. After the pH inside the system was controlled to be 3.7 by using 60% sulfuric acid, the resulting mixture was reacted at 110°C for 4 hours. After the reaction had been completed, 600 g of ion-exchange water was added to the reaction mixture. The resulting mixture was stirred at 60°C and subsequently left to stand. The water layer separated at the bottom was removed. Then, the pressure was reduced and the solvent was removed. Thus, an n-butanol solution of an alkoxylated resole-type phenolic resin (3) having a solid content of 50% was prepared. The proportion (degree of alkoxylation) of methylol groups included in the alkoxylated resole-type phenolic resin (3) which were converted into butoxy groups was 59%. The weight-average molecular weight of the alkoxylated resole-type phenolic resin (3) which was determined under the "GPC measurement conditions (1)" was 3,480. The weight-average molecular weight of the alkoxylated resole-type phenolic resin (3) which was determined under the "GPC measurement conditions (2)" was 3,130.

Comparative Example 1 (Method for Producing Comparative Alkoxylated Resole-type Phenolic Resin)

To a four-neck flask equipped with a stirrer, a condenser, and a thermometer, 540 g (5 moles) of m-cresol, 489 g (15 moles) of 92% paraform, 740 g (10 moles) of n-butanol, and 5.4 g of sodium hydroxide were added. The resulting mixture was heated to 70°C and reacted at 70°C for 3 hours. To the mixture, 1110 g (15 moles) of n-butanol was added. After the pH inside the system was controlled to be 3.7 by using 60% formic acid, the resulting mixture was reacted at 110°C for 4 hours. After the reaction had been completed, 600 g of ion-exchange water was added to the reaction mixture. The resulting mixture was stirred at 60°C and subsequently left to stand. The water layer separated at the bottom was removed. Then, the pressure was reduced and the solvent was removed. Thus, an n-butanol solution of a comparative alkoxylated resole-type phenolic resin (1') having a solid content of 50% was prepared. The proportion (degree of alkoxylation) of methylol groups included in the comparative alkoxylated resole-type phenolic resin (1') which were converted into butoxy groups was 55%. The weight-average molecular weight of the comparative alkoxylated resole-type phenolic resin (1') which was determined under the "GPC measurement conditions (1)" was 1,140. The weight-average molecular weight of the comparative alkoxylated resole-type phenolic resin (1') which was determined under the "GPC measurement conditions (2)" was 1,020.

Example 4 [Resin Composition (Coating Material) According to Present Invention]

A polyester resin "VYLON GK640" (number-average molecular weight: 18,000, Tg: 79°C, OH value: 5 mgKOH/g, as published by Toyobo Co., Ltd.) produced by Toyobo Co., Ltd. was dissolved in methyl isobutyl ketone such that the final concentration of the polyester resin in methyl isobutyl ketone was 50% to form a solution of polyester resin. With 80 parts of the solution of polyester resin, 20 parts of the n-butanol solution of the alkoxylated resole-type phenolic resin (1) and 0.05 parts of dodecylbenzenesulfonic acid were mixed. Thus, a resin composition (1) [coating material (1)] according to the present invention was prepared. A coating film was prepared using the resin composition (1) [coating material (1)] by the method described below and evaluated in terms of curability, hot-water resistance, workability, and adhesion to metals. Table 1 summarizes the evaluation results.

<Method for Evaluating Curability>

The resin composition (1) was applied to an aluminium sheet with a bar coater such that the amount of resin composition (1) deposited on the aluminium sheet was 70 mg/dm$^2$. The curability of the resulting coating film was evaluated on the basis of the results of a rigid-body pendulum test of the coating film. Specifically, the physical pendulum test was conducted using a physical pendulum viscoelasticity gage (RPT-3000W: produced by A&D Company, Limited), a knife edge "RBE-160" as an edge that was brought into contact with the coating film, and a pendulum "FRB-1000". The resin composition (1) was applied to an aluminium sheet with a bar coater such that the amount of resin composition (1) deposited on the aluminium sheet was 70 mg/dm$^2$, and the resulting coating film was dried. The pendulum was placed on the dried coating film, and the temperature was increased at 40 °C/min. The temperature at which the logarithmic damping ratio of the vibration of the pendulum reached 0.1 was considered to be the curing temperature of the coating film. The lower the curing temperature of the coating film, the higher the curability of the coating film.

<Method for Evaluating Hot-water Resistance (Retort Resistance)>

The resin composition (1) was applied to an aluminium sheet with a bar coater such that the amount of resin composition (1) deposited on the aluminium sheet was 70 mg/dm$^2$. The resulting coating film was allowed to cure at 250°C for 2 minutes. Thus, an aluminium sheet including a cured coating film deposited thereon was prepared. The aluminium sheet was subjected to a pressure retort apparatus at 125°C for 30 minutes in order to perform a hot-water retort treatment. After the treatment had been completed, the surface of the coating film was visually inspected and evaluated with reference to the following criteria.

Good: Occurrence of bleaching, floating, or swelling (blistering) was not confirmed on the surface of the coating film.
Fair: Occurrence of bleaching or blistering was confirmed at a slight degree on the surface of the coating film.
Poor: Occurrence of bleaching or blistering was confirmed at a considerable degree on the surface of the coating film.

<Method for Evaluating Workability>

The resin composition (1) was applied to an aluminium sheet with a bar coater such that the amount of resin composition (1) deposited on the aluminium sheet was 70 mg/dm$^2$. The resulting aluminium sheet was cut into a 4 x 5 cm specimen. The specimen was preliminarily folded such that the surface coated with the resin composition (1) faced outside. Two aluminium sheets having the same thickness as the specimen were inserted as a spacer into the fold of the specimen. A 3-kg weight was dropped onto the resulting specimen from a height of 50 cm. Thus, a test specimen was prepared. While the outer surface of the fold of the test specimen was pressed against a sponge impregnated with a 1% saline solution, a voltage of 6 V was applied to the test specimen for 3 seconds, and current measurement was conducted using a current tester. An evaluation was made on a scale of "Good", "Fair", and "Poor" as described below.

Good: The current was less than 1 mA.
Fair: The current was 1 mA or more and less than 5 mA.

Poor: The current was 5 mA or more.

<Method for Evaluating Adhesion to Metals>

The resin composition (1) was applied to an aluminium sheet with a bar coater such that the amount of resin composition (1) deposited on the aluminium sheet was 70 mg/dm². The resulting coating film was allowed to cure at 125°C for 30 minutes. Thus, an aluminium sheet including a cured coating film deposited thereon was prepared. The cured coating film was subjected to a cross-cut test conforming to JIS K 5400. Specifically, 11 longitudinal slits and 11 horizontal slits were cut in the coated surface of the aluminium sheet at intervals of 1 mm to form 100 cells having a size of 1-mm square. An adhesive tape was stuck onto the coated surface of the aluminum sheet and subsequently removed quickly at an angle of 90 degrees. The number of cells from which the coating film was not removed but remained, that is, m, was used for evaluation. The larger the value of m, the higher the adhesion of the coating film to metals.

Example 5 (Resin Composition (Coating Material) According to Present Invention)

A resin composition (2) [coating material (2)] was prepared as in Example 4, except that the n-butanol solution of the alkoxylated resole-type phenolic resin (2) was used instead of the n-butanol solution of the alkoxylated resole-type phenolic resin (1). The resin composition (2) [coating material (2)] was subjected to the same evaluations as in Example 4. Table 1 summarizes the results.

Example 6 (Resin Composition (Coating Material) According to Present Invention)

A resin composition (3) [coating material (3)] was prepared as in Example 4, except that the n-butanol solution of the alkoxylated resole-type phenolic resin (3) was used instead of the n-butanol solution of the alkoxylated resole-type phenolic resin (1). The resin composition (3) [coating material (3)] was subjected to the same evaluations as in Example 4. Table 1 summarizes the results.

Comparative Example 2

A comparative resin composition (1') [comparative coating material (1')] was prepared as in Example 3, except that the n-butanol solution of the comparative alkoxylated resole-type phenolic resin (1') was used instead of the n-butanol solution of the alkoxylated resole-type phenolic resin (1). The comparative resin composition (1')

[comparative coating material (1')] was subjected to the same evaluations as in Example 3. Table 1 summarizes the results.

[Table 1]

Table 1

| | Example 4 | Example 5 | Example 6 | Comparative example 2 |
|---|---|---|---|---|
| Resin composition (coating material) used | (1) | (2) | (3) | (1') |
| Curability | 185°C | 190°C | 190°C | 205°C |
| Hot-water resistance | Good | Good | Good | Poor |
| Workability | Good | Good | Good | Poor |
| Adhesion to metals | 100 | 100 | 100 | 30 |

Claims

1.  A method for producing an alkoxylated resole-type phenolic resin, the method comprising reacting a phenol (a1) including meta-cresol with an aldehyde (a2) in the presence of a basic compound to prepare a resole-type phenolic resin (A); and reacting the resole-type phenolic resin (A) with an alcohol (B) in the presence of an acidic compound having an acid dissociation constant (pKa) of 0 or less.

2.  The method for producing an alkoxylated resole-type phenolic resin according to Claim 1, wherein the acid dissociation constant (pKa) of the acidic compound is -5 to 0.

3. The method for producing an alkoxylated resole-type phenolic resin according to Claim 1, wherein the acidic compound having an acid dissociation constant (pKa) of 0 or less is sulfuric acid.

4. The method for producing an alkoxylated resole-type phenolic resin according to Claim 1, wherein the resole-type phenolic resin (A) is reacted with the alcohol (B) such that 40% to 59% of methylol groups included in the resole-type phenolic resin (A) are converted into alkoxy groups.

5. The method for producing an alkoxylated resole-type phenolic resin according to Claim 1, wherein the phenol (a1) is reacted with the aldehyde (a2) such that the resole-type phenolic resin (A) has a weight-average molecular weight of 1,900 to 6,000.

6. The method for producing an alkoxylated resole-type phenolic resin according to Claim 1, wherein the resole-type phenolic resin (A) is reacted with the alcohol (B) such that 60% to 90% of methylol groups included in the resole-type phenolic resin (A) are converted into alkoxy groups.

7. An alkoxylated resole-type phenolic resin produced by reacting a phenol (a1) including meta-cresol with an aldehyde (a2) in the presence of a basic compound to prepare a resole-type phenolic resin (A) and reacting the resole-type phenolic resin (A) with an alcohol (B), the alkoxylated resole-type phenolic resin having a weight-average molecular weight of 1,900 to 6,000, wherein 50% or more of methylol groups included in the resole-type phenolic resin (A) are converted into alkoxy groups.

8. An alkoxylated resole-type phenolic resin produced by reacting a phenol (a1) including meta-cresol with an aldehyde (a2) in the presence of a basic compound to prepare a resole-type phenolic resin (A) and reacting the resole-type phenolic resin (A) with an alcohol (B), the alkoxylated resole-type phenolic resin having a weight-average molecular weight of 600 to 1,800, wherein 40% to 59% of methylol groups included in the resole-type phenolic resin (A) are converted into alkoxy groups.

9. The alkoxylated resole-type phenolic resin according to Claim 7 or 8, wherein, subsequent to the phenol (a1) including meta-cresol being reacted with the aldehyde (a2) in the presence of the basic compound to prepare the resole-type phenolic resin (A), the resole-type phenolic resin (A) is reacted with the alcohol (B) in the presence of an acidic compound having an acid dissociation constant (pKa) of 0 or less.

10. The alkoxylated resole-type phenolic resin according to Claim 9, wherein the acidic compound having an acid dissociation constant (pKa) of 0 or less is sulfuric acid.

11. The alkoxylated resole-type phenolic resin according to Claim 8, wherein the resole-type phenolic resin (A) is reacted with the alcohol (B) such that 40% to 59% of methylol groups included in the resole-type phenolic resin (A) are converted into alkoxy groups.

12. A resin composition comprising an alkoxylated resole-type phenolic resin produced by the production method according to any one of Claims 1 to 6; and a polyester resin including a hydroxyl group.

13. A resin composition comprising the alkoxylated resole-type phenolic resin according to any one of Claims 7 to 11; and a polyester resin including a hydroxyl group.

14. A coating material comprising the resin composition according to Claim 12 or 13.

15. The coating material according to Claim 14, the coating material being used for coating inner surfaces of cans.

## INTERNATIONAL SEARCH REPORT

| International application No. |
| --- |
| PCT/JP2015/058210 |

| A. CLASSIFICATION OF SUBJECT MATTER |
| --- |
| *C08G16/04*(2006.01)i, *C08L61/08*(2006.01)i, *C08L67/02*(2006.01)i, *C09D161/08* (2006.01)i |
| According to International Patent Classification (IPC) or to both national classification and IPC |

| B. FIELDS SEARCHED |
| --- |
| Minimum documentation searched (classification system followed by classification symbols)<br>C08G4/00-C08G16/06, C08K3/00-13/08, C08L1/00-101/14, C09D1/00-10/00, C09D101/00-201/10 |
| Documentation searched other than minimum documentation to the extent that such documents are included in the fields searched<br> Jitsuyo Shinan Koho    1922-1996  Jitsuyo Shinan Toroku Koho  1996-2015<br> Kokai Jitsuyo Shinan Koho  1971-2015  Toroku Jitsuyo Shinan Koho  1994-2015 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| X<br>A | JP 2013-166945 A  (Gunei Chemical Industry Co., Ltd.),<br>29 August 2013 (29.08.2013),<br>claim 1; paragraph [0037]; examples 1 to 2, 5, 9 to 11<br>(Family: none) | 1-3,5,7,9-10<br>4,6,8,11-15 |
| X<br>A | JP 2012-162642 A  (Gunei Chemical Industry Co., Ltd.),<br>30 August 2012 (30.08.2012),<br>claim 1; paragraph [0037]; examples 1 to 5, 9 to 11<br>(Family: none) | 1-3,5,7,9-10<br>4,6,8,11-15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br> 28 May 2015 (28.05.15) | Date of mailing of the international search report<br> 09 June 2015 (09.06.15) |
| --- | --- |
| Name and mailing address of the ISA/<br> Japan Patent Office<br> 3-4-3,Kasumigaseki,Chiyoda-ku,<br> Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/058210

| C (Continuation). DOCUMENTS CONSIDERED TO BE RELEVANT | | |
|---|---|---|
| Category* | Citation of document, with indication, where appropriate, of the relevant passages | Relevant to claim No. |
| X<br>A | JP 2012-063498 A (Toray Industries, Inc.),<br>29 March 2012 (29.03.2012),<br>claim 1; examples 6 to 9<br>(Family: none) | 7<br>1-6,8-15 |
| X<br>A | JP 2002-105156 A (Sumitomo Bakelite Co., Ltd.),<br>10 April 2002 (10.04.2002),<br>claims 1 to 2; paragraphs [0010] to [0011],<br>[0020]<br>(Family: none) | 7-8,11-15<br>1-6,9-10 |
| A | JP 11-315251 A (Kansai Paint Co., Ltd.),<br>16 November 1999 (16.11.1999),<br>claims; preparation examples 6, 9<br>(Family: none) | 1-15 |
| A | JP 2000-336304 A (Sumitomo Durez Co., Ltd.),<br>05 December 2000 (05.12.2000),<br>claim 1; examples<br>(Family: none) | 1-15 |
| A | JP 61-111742 A (Acme Resin Corp.),<br>29 May 1986 (29.05.1986),<br>claims; page 4, upper left column<br>& US 4546124 A & EP 177871 A2 | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000336304 A